# EUROPÄISCHE PATENTSCHRIFT

(11) **EP 2 279 708 B1**
(45) Veröffentlichungstag und Bekanntmachung des Hinweises auf die Patenterteilung: **15.05.2013**
(21) Anmeldenummer: 09009674.4
(22) Anmeldetag: 27.07.2009
(51) Int. Cl.: A61C 8/00

(54) **Behälter für ein medizinisches Instrument oder Implantat, insbesondere ein dentalmedizinisches Instrument oder ein Dentalimplantat**
Container for a medical instrument or implant, in particular a dental instrument or a dental implant
Récipient pour un instrument ou implant médical, notamment instrument médical dentaire ou implant dentaire

(43) Veröffentlichungstag der Anmeldung: 02.02.2011
(73) Patentinhaber: Straumann Holding AG, 4002 Basel (CH)
(72) Erfinder: Günter, Daniel, CH-4002 Basel (CH); Bammerlin, Rainer, CH-4002 Basel (CH)
(74) Vertreter: Fraefel, Christoph

(56) Entgegenhaltungen:
- EP-A- 1 523 955
- WO-A-00/02496
- WO-A-98/53755
- DE-A1-102007 037 593
- US-A- 5 733 124
- US-A1- 2003 221 977

## Beschreibung

Die vorliegende Erfindung betrifft einen Behälter für ein medizinisches Instrument oder ein Implantat, insbesondere ein dentalmedizinisches Instrument oder ein Dentalimplantat.

Für die Auslieferung von medizinischen Instrumenten oder Implantaten gibt es grundsätzlich zwei Möglichkeiten. Entweder liefert man solche Instrumente oder Implantate unsterilisiert aus, wobei eine Sterilisation, welche vor der Anwendung des Instrumentes oder des Implantates am Patienten unumgänglich ist, vom Chirurgen oder Arzt durchgeführt werden muss. Eine solche Vorgehensweise birgt jedoch immer das Risiko, dass die Sterilisation unvollständig und nicht ganz sauber durchgeführt wird, was mit späteren Komplikationen beim Patienten verbunden sein kann. Eine andere Möglichkeit, solche medizinische Instrumente oder Implantate auszuliefern, besteht darin, die Sterilisation vor der Auslieferung vom Hersteller durchführen zu lassen und das Instrument oder das Implantat in einem sterilen Zustand für eine sofortige Anwendung am Patienten auszuliefern. Ein Problem dieser Methode besteht darin, dass die Instrumente nach dem Öffnen der Sterilbarriere häufig in eine Antriebseinheit eingesetzt werden müssen, wie dies beispielsweise bei einem Bohrer der Fall ist. Implantate müssen entsprechend meistens mit einem Hilfswerkzeug aufgenommen werden, um mit diesem das Einsetzen des Implantates am Patienten zu bewerkstelligen, wie dies beispielsweise bei einem Dentalimplantat der Fall ist, welches häufig mittels einer Ratsche und eines Eindrehadapters in den Knochen gedreht wird. Dabei muss gewährleistet werden, dass das Instrument oder das Implantat beim Herausnehmen aus dem Behälter und beim Einsetzen in das Antriebsinstrument oder das Hilfswerkzeug nicht chemisch biologisch oder partikulär kontaminiert und dadurch unsteril wird oder diese in der Funktion beeinträchtigt.

Ein entsprechender Behälter für medizinische Instrumente ist beispielsweise aus DE 101 46 905 bekannt. Darin wird ein Instrumentenbehälter offenbart, welcher bei einfachem Aufbau eine einfache und sichere Anwendung, insbesondere die Handhabung eines sterilen medizinischen Instrumentes, ermöglicht. Der Instrumentenbehälter weist dabei einen Aufnahmeteil zur lösbaren Halterung zumindest eines Arbeitsteils des Instruments und einen lösbar an diesem Aufnahmeteil befestigte Kappenteil zur Aufnahme zumindest eines Teils des Schaftes des Instrumentes auf. Durch diese Trennung des Instrumentenbehälters in zwei Funktionseinheiten, den Aufnahmeteil und den Kappenteil, wird ermöglicht, dass das Instrument vom Hersteller sterilisiert und dem Arzt anwendungsbereit zur Verfügung gestellt werden kann und ein Einsetzen des Instrumentes in eine Antriebseinheit oder ein Hilfswerkzeug ohne Kontamination möglich ist.

US 2003/0221977 offenbart einen Behälter für ein Dentalimplantat mit einem Gehäuseteil und einem Deckel, der Teilweise in den Gehäuseteil hineinragt. Der Behälter umfasst zudem einen Verriegelungsmechanismus, welcher dazu dient, ein Implantat im Inneren des Behälters zu fixieren.

EP 1 523 955 offenbart einen Behälter für einen medizinischen Gegenstand, z.B. ein Implantat, mit einem äusseren Gehäuseteil und einem inneren Gehäuseteil, wobei der innere Gehäuseteil einen von aussen zugänglichen Griff aufweist. Durch Betätigen des Griffs kann ein Verriegelungsmechanismus, beispielsweise ein Bajonettverschluss, zwischen dem äusseren Gehäuseteil und dem inneren Gehäuseteil gelöst werden. Im Inneren des Behälters kann ein Dentalimplantat angeordnet sein.

WO 98/53755 offenbart einen Behälter mit zwei lösbar miteinander verbundenen Behälterteilen, welcher ein Dentalimplantat und einen Halter enthält. Der Behälter besteht aus einen ersten, grösseren Behälterteil, auch als "Ampulle" bezeichnet, und einem zweiten, kleineren Behälterteil, der auch als "Deckel" bezeichnet wird. Zwischen dem Deckel und der Ampulle wirkt ein Verriegelungsmechanismus in Form eines Gewindes. Im Inneren des Behälters ist zudem eine weitere Ampulle angeordnet.

DE 10 2007 037 593 offenbart einen Aussenbehälter für einen Implantatträger, umfassend einen zylindrischen Rumpfteil und einen Deckel, welcher auf den Rumpfteil aufgeschraubt ist. Im Inneren des Behälters sind ein Halteelement und ein Dentalimplantat angeordnet.

WO 00/02496 offenbart einen Behälter mit einem Gehäuseteil und einem Deckel, welche mithilfe von Federfingern miteinander verbunden werden können. Im Innern des Behälters können ein Implantat und eine Schraube angeordnet sein.

US 5,733,124 offenbart einen Behälter mit einem Gehäuseteil und einem Deckel. Die beiden Teile werden mittels Reibschluss miteinander verbunden.

Eine Aufgabe der vorliegenden Erfindung ist, einen Behälter für ein medizinisches Instrument oder ein Implantat, insbesondere ein dentalmedizinisches Instrument oder ein Dentalimplantat, bereitzustellen, Der sicher transportiert werden kann. Des Weiteren soll der Behälter derart ausgebildet sein, dass das Instrument oder das Implantat möglichst wenig Kontaktflächen zum Behälter aufweist, so dass eine Sterilisation des Instrumentes oder Implantates einfacher zu bewerkstelligen ist.

Diese Aufgabe wird durch einen Behälter für ein medizinisches Instrument oder ein Implantat, insbesondere ein dentalmedizinisches Instrument oder ein Dentalimplantat, welcher die Merkmale des Patentanspruchs 1 aufweist, gelöst.

Besonders bevorzugte Ausführungsformen und Merkmale sind in den abhängigen Patentansprüchen spezifiziert.

Der Behälter für ein medizinisches Instrument oder ein Implantat, insbesondere ein dentalmedizinisches Instrument oder ein Dentalimplantat, gemäss der vorliegenden Erfindung weist ein äusseres Gehäuseteil und ein innerhalb des äusseren Gehäuseteils angeordnetes inneres Gehäuseteil auf. Das innere Gehäuseteil kann relativ zum äusseren Gehäuseteil von einer Schliessstellung in eine Offenstellung bewegt werden, um den Behälter zu schliessen oder zu öffnen. Typischerweise ist die Schliessstellung die Stellung, in welcher der Behälter transportiert und ausgeliefert wird, und typischerweise ist die Offenstellung die Stellung, in welcher das Implantat mit dem Halter aus dem Behälter herausgenommen werden kann. Des Weiteren ist der Behälter mit einem Verriegelungsmechanismus ausgestattet, welcher verhindert, dass das innere Gehäuseteil unbeabsichtigt bewegt werden kann und somit aus der Schliessstellung durch die Bewegung des inneren Gehäuseteils relativ zum äusseren Gehäuseteil in die Offenstellung übergehen kann. Um diesen Verriegelungsmechanimus zu entriegeln, wird ein Griff des inneren Gehäuseteils, der von aussen zugänglich ist, betätigt, was eine Entriegelung des Verriegelungsmechanismus bewirkt. Die Entriegelung kann beispielsweise mittels Drehen, Klemmen oder Schrauben des Griffs bewirkt werden.

Der Behälter ist insbesondere als Lager- und Transportbehälter für Dentalimplantate, besonders bevorzugt für vollkeramische Dentalimplantate, geeignet. Dabei enthält der Behälter einen Adapter und ein Implantat. Der Adapter ist dabei so angeordnet, dass er formschlüssig mit dem Implantat verbunden ist. Ein Halter wird anschliessend noch in Schliessstellung des Behälters in den Adapter eingeführt und verbindet sich formschlüssig mit dem Implantat. Der Adapter dient dabei zur Findung der korrekten rotatorischen Ausrichtung des Halters relativ zum Implantat. Alternativ wäre es natürlich auch möglich den Halter bereits vor dem Transport/Sterilisation in den Behälter einzuführen und mit dem Implantat zu verbinden.

Der innere Behälter umgreift mit seinem innerhalb des äusseren Behälters liegenden Ende Federfinger oder Schnapplippen des Adapters, die das Implantat halten. Dadurch wird die Klemmkraft der Vorrichtung während des Transportes erhöht.

Eine weiter bevorzugte Ausführungsform des Behälters besteht darin, dass der Verriegelungsmechanismus einen Bajonettverschluss aufweist, welcher zwischen dem äusseren und dem inneren Gehäuseteil wirkt.

Andere Ausführungsformen für den Verriegelungsmechanismus sind denkbar, wie beispielsweise eine Konstruktion, bei welcher Nocken oder Federfinger am inneren Gehäuseteil angebracht sind und in entsprechende nutartige Vertiefungen am äusseren Gehäuseteil eingreifen und damit das äussere gegenüber dem inneren Gehäuseteil verriegeln. Durch ein manuelles Hineindrücken der Nocken oder Federfinger mit einer gleichzeitigen Drehbewegung am Griff des inneren Gehäuseteils, der von aussen zugänglich ist, können dabei die Nocken oder Federfinger aus ihren nutartigen Vertiefungen herausgedrückt und aus der Verriegelungsposition gebracht werden, was erlaubt, den inneren Gehäuseteil relativ zum äusseren Gehäuseteil zu bewegen und damit den inneren Gehäuseteil von der Schliess- in die Offenstellung zu bringen. Alternativ wäre aber auch ein Schraubverschluss möglich.

In einer besonders bevorzugten Ausführungsform des Behälters ist die Anordnung des Adapters derart ausgestaltet, dass die Kontaktfläche zwischen dem Adapter und dem Implantat minimal ist. Eine Sterilisation von Kontaktflächen zwischen zwei Elementen wird dadurch erschwert, dass das Sterilisationsmittel wie beispielsweise EO Gas, Wasserdampf oder H₂O₂. Keime auf diesen Kontaktflächen schlechter erreicht als auf Gebieten, welche für eine Flüssigkeit oder ein Gas frei zugänglich sind. Deshalb ist ein Vorteil einer Minimierung der Kontaktfläche zwischen dem Adapter und dem Implantat, dass der Sterilisationsvorgang dadurch erleichtert wird. Je kleiner die Kontaktfläche konstruiert wird, umso kleiner sind die für eine vollständige Sterilisation heiklen Sterilisationsflächen, und entsprechend können Risiken von allfälligen Nebenwirkungen, hervorgerufen durch eine schlechte oder unvollständige Sterilisation, minimiert werden. Dadurch, dass der Adapter in seinem einem Adapterendbereich Federfinger mit Stütznasen aufweist, die nur an den Anlageflächen der Stütznasen mit dem Implantat in Kontakt sind, sind die Kontaktflächen zwischen Adapter und Implantat minimal. Nur wenige Bereiche des Implantats sind für das Sterilisationsmittel damit nicht zugänglich. Ausserdem bestehen durch den erfindungsgemässen Behälter auch keine Kontaktflächen zwischen dem Implantat und dem inneren oder dem äusseren Gehäuseteil.

In einer bevorzugten Ausführungsform wird die manuell auftrennbare Anordnung des Adapters an einem der Gehäuseteile mittels Klemmvorrichtung bewerkstelligt. Diese Klemmvorrichtung kann entweder am Adapter oder am Gehäuseteil angebracht sein. In einer bevorzugten Ausführungsform ist die Klemmvorrichtung an der in dem äusseren Gehäuseteil liegende Frontseite des inneren Gehäuseteils angeordnet. Diese Klemmvorrichtung umschliesst Teile des Adapters, die vorzugsweise als Federfinger ausgebildet sind. Dadurch hat das Implantat oder das medizinische Instrument keinen direkten Kontakt mit einem Gehäuseteil des Behälters, wodurch der Sterilisationsvorgang wiederum erleichtert und die Kontamination des Implantates durch Behältermaterialien verhindert wird. Zudem ist das medizinische Instrument oder Implantat, insbesondere das dentalmedizinisches Instrument oder das Dentalimplantat, weniger anfällig auf Beschädigungen während dem Transport, wenn es keine Kontaktfläche mit dem Behälter aufweist und bei Erschütterungen entsprechend nicht am Behälter aufschlägt und dadurch beschädigt werden kann.

In einer weiteren bevorzugten Ausführungsform ragt der Halter nach dem Einführen in den Behälter an seinem einen Ende über die entsprechende Stirnseite, welche vom äusseren Gehäuseteil gebildet wird, hinaus, um den Zugang zum Halter von ausserhalb des Behälters zu erleichtern. Idealerweise weist der Halter einen Schaft auf, der dazu dient in ein Eindrehwerkzeug eingeführt zu werden. Dadurch kann der Operateur das Implantat zusammen mit dem Halter und dem Adapter mit dem Eindrehwerkzeug aus dem Behälter entnehmen, ohne es berühren zu müssen und damit optimale Sterilisationsbedingungen einzuhalten. Dabei klickt der Operateur idealerweise mit dem Eindrehwerkzeug in den Schaft des Halters, bevor der Verriegelungsmechanismus des Behälters geöffnet wird.

In einer weiteren bevorzugten Ausführungsform weist der innere Gehäuseteil ein Stoppelement auf, das verhindert, dass das innere Gehäuseteil vollständig aus dem äusseren Gehäuseteil unbeabsichtigt entfernt werden kann. Dies hat zur Folge, dass der Operateur den Halter mit dem medizinischen Instrument oder dem Implantat einfach entnehmen kann, ohne dass er sowohl äusseres als auch inneres Gehäuseteil festhalten müsste. Das Stoppelement kann eine Ausnehmung oder eine Ausstülpung sein, welche gegen einen Anschlag oder ein Aufnahmeelement des äusseren Gehäuseteils schlägt und so ein Entnehmen des inneren Gehäuseteils verhindert. Gleichzeitig kann eine Rotation des inneren Gehäuseteils im äusseren Gehäuseteil vermieden werden. In einer bevorzugten Ausführungsform rastet Stoppelement in ein Gegenelement ein. Ein solcher Schnappmechanismus führt zu einer axialen und rotatorischen Verriegelung des Behälters in Offenstellung.

Das äussere Gehäuseteil, das innere Gehäuseteil und der Adapter sind aus einem biokompatiblen, sterilisierbaren Material gefertigt, um eine Sterilisation einfach durchführen zu können. In einer besonders bevorzugten Ausführungsform besteht das Material des äusseren Gehäuseteils, des inneren Gehäuseteils und des Adapters beispielsweise aus Titan oder Kunststoff, rostfreiem Stahl, Keramik oder Kompositmaterialien.

In einer weiteren bevorzugten Ausführungsform des Behälters sind das äussere Gehäuseteil und das innere Gehäuseteil formstabil und bevorzugterweise röhrenförmig ausgebildet. Zudem weisen die Gehäuseteile bevorzugterweise schlitzartige Löcher für einen besseren Zugang des Sterilisationsmediums zur Oberfläche (Implantat, Instrument) auf. Durch die Formstabilität wird erreicht, dass, insbesondere während dem Transport, das medizinische Instrument oder Implantat, insbesondere das dentalmedizinisches Instrument oder das Dentalimplantat, optimal geschützt und vor Beschädigungen oder Kontaminationen verschont wird.

Anstelle einer zweiteiligen Ausführungsform, bei der Halter und Adapter zwei separate Teile sind, ist auch eine einteilige Ausführungsform möglich, bei der der Adapter ein integraler Teil des Halters ist, möglich. In diesem Fall muss selbstverständlich der Halter bereits vor dem Transport im Behälter sein, sodass der integrierte Adapter seine Transportsicherungsfunktion wahrnehmen kann. Die zweiteilige Ausführungsform ist allerdings bevorzugt.

Bei der zweiteiligen Ausführungsform ist der Adapter am Halter befestigbar. Der Adapter ist in einem Adapterendbereich mit Federfingern ausgestattet, welche Stütznasen aufweisen. Die Stütznasen bilden Auflageflächen für das Implantat. An diesen Auflageflächen wird das Implantat gestützt und gehalten. Diese Untergreifen den Abutmentteil des Implantates und halten dieses entsprechend formschlüssig. Diese Konstruktion ermöglicht ein sicheres Halten des Implantates, obschon nur eine geringe Fläche des Implantates mit dem Adapter Kontakt hat. Dadurch wird eine gute Sterilisierbarkeit des Implantates ermöglicht.

In der einteiligen Ausführungsform ist der Adapter ein integraler Teil des Halters, das heisst, der Halterendbereich ist mit Federfingern, welche Stütznasen aufweisen, ausgestattet ist. Die Stütznasen haben dabei die gleiche Funktion wie bei der zweiteiligen Ausführungsform.

Eine wichtige Konstruktionseigenschaft des Adapters ist es, dass die Auflagefläche zwischen den Stütznasen und dem Dentalimplantat eine minimale Fläche aufweisen. Die minimal ausgebildeten Kontaktflächen zwischen dem Adapter und dem Implantat, ermöglichen eine einfache Sterilisation des Implantates. Minimal bedeutet, dass die einzelnen Kontaktflächen weniger als 1 mm² betragen. Je kleiner die Kontaktfläche konstruiert wird, umso kleiner sind die für eine vollständige Sterilisation heiklen Sterilisationsflächen, und entsprechend können Risiken von allfälligen Nebenwirkungen, hervorgerufen durch eine schlechte oder unvollständige Sterilisation des Implantates, minimiert werden.

In einer weiteren bevorzugten Ausführungsform ist das Implantat ein einteiliges Implantat, d.h. Verankerungsteil und Abutmentteil sind einstückig und das Implantat ist ein Keramikimplantat. Idealerweise ist der Aufbauteil (Abutment) des Implantates derart ausgestaltet, dass die Auflageflächen der Stütznasen des Adapters die Schulterfläche des Abutments untergreifen können und so das Implantat formschlüssig halten.

Die Erfindung wird anhand eines in der Zeichnung dargestellten Ausführungsbeispiels erläutert. Es zeigen rein schematisch:
- Fig. 1: eine perspektivische Darstellung eines Behälters für ein medizinisches Instrument oder ein Implantat, in dieser Ausführungsform für ein Dentalimplantat, wobei sich der Behälter in einer Schliessstellung befindet;
- Fig. 2: eine perspektivische Darstellung des Behälters aus Figur 1, wobei sich der Behälter in einer Offenstellung befindet;
- Fig. 3a: eine perspektivische Detailansicht von einem Adapters;
- Fig. 3b: eine Detailansicht eines Adapters aus Figur 3a.
- Fig. 4: eine bevorzugte Ausführungsform mit einem Stoppelement

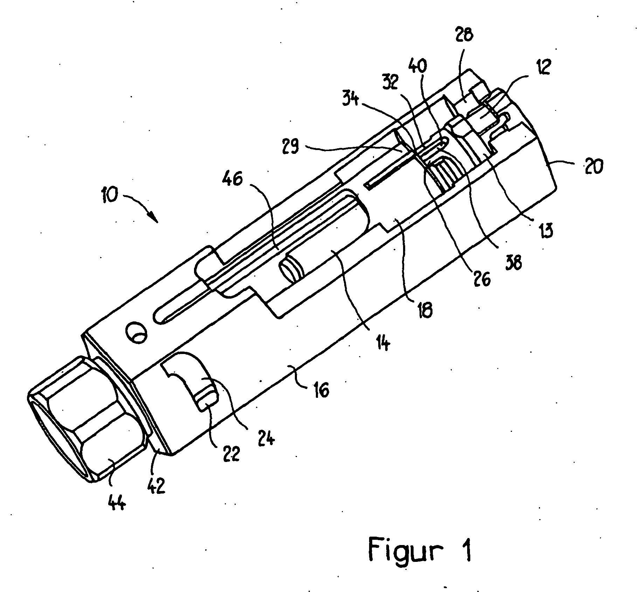

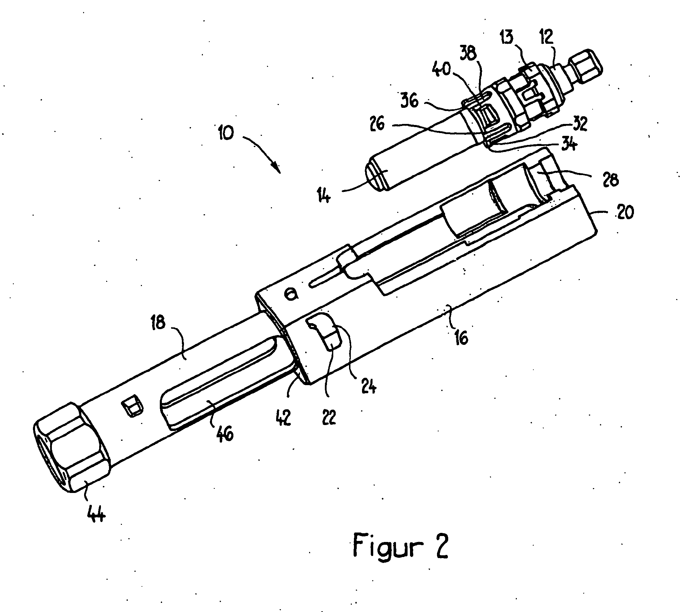

Figur 1 zeigt eine perspektivische Darstellung eines Behälters 10 mit einem Halter 12 für ein medizinisches Dentalimplantat 14. Der Behälter 10 wird durch ein äusseres Gehäuseteil 16 und ein inneres Gehäuseteil 18 gebildet. Das innere Gehäuseteil 18 ist im äusseren Gehäuseteil 16 angeordnet. Das innere Gehäuseteil 18 ist relativ zum äusseren Gehäuseteil 16 bewegbar, dadurch lässt sich der Behälter 10 von einer in Figur 1 abgebildeten Schliessstellung in eine (in Figur 2 abgebildete) Offenstellung transformieren. Der Schaft des Halters 12 für das Dentalimplantat 14 ist auf einer Stirnseite 20 des Behälters 10, welche durch das äussere Gehäuseteil 16 gebildet wird, seitlich von aussen zugänglich, beispielsweise für eine Aufnahme und ein Einspannen des Halters 12 in eine Ratsche oder ein anderes Eindrehwerkzeug. Des Weiteren ist der Behälter 10 mit einem Verriegelungsmechanismus 22 ausgestattet, welcher verhindert, dass das innere Gehäuseteil 18 unbeabsichtigt bewegt werden kann und somit aus der Schliessstellung durch die Bewegung des inneren Gehäuseteils 18 relativ zum äusseren Gehäuseteil 16 in die Offenstellung übergehen kann. In der dargestellten Ausführungsform wirkt der Verriegelungsmechanismus 22 zwischen dem äusseren Gehäuseteil 16 und dem inneren Gehäuseteil 18 und weist einen Bajonettverschluss 24 auf. Das innere Gehäuseteil 18 weist einen Griff 44 auf, der ausserhalb der Stirnseite 42 des äusseren Gehäuseteils 16 angeordnet ist, wobei die Stirnseite 42 der Stirnseite 20 gegenüberliegt. Die Betätigung des von aussen damit zugänglichen Griffs 44 in Form von Drehen bewirkt eine Entriegelung des Verriegelungsmechanismus 22. Dadurch lässt sich der innere Gehäuseteil 18 gegenüber dem äusseren Gehäuseteil 16 mittels einer Bewegung parallel zur Achse des Behälters 10 in die Offenstellung bewegen. Alternativ sind auch Verriegelungsmechanismen denkbar, die mittels Klemmen oder Schrauben entriegelt werden können.

Der äussere Gehäuseteil 16 und der innere Gehäuseteil 18 können beispielsweise röhrenförmig sein. Die Stirnseiten des inneren Gehäuseteils 16 und des äusseren Gehäuseteils können beide offen sein.

Ein Halter 12 ist am Adapter 13 angebracht. Der Adapter weist an einem Adapterendbereich 30 Federfinger 32 auf, welche mit Stütznasen 34 ausgestattet sind. Diese Stütznasen 34 bilden Auflageflächen 36 für das Dentalimplantat 14, um dieses zu halten. Dazu untergreifen sie idealerweise die Schulterflächen des Abutments des Implantates und halten so das Implantat formschlüssig. Der Adapter dient dabei zur Findung der korrekten rotatorischen Ausrichtung des Halters relativ zum Implantat, wenn der Halter in den Adapter eingeführt wird. Der Halter wird dabei mit dem Aufbauteil des Dentalimplantates in einem Aufnahmebereich des Halters formschlüssig gehalten (nicht gezeigt). Zwischen den Stütznasen 34 des Adapters 13 sind schlitzartige Einkerbungen 38 angebracht, welche eine gute Sterilisierbarkeit ermöglichen.

Die Anordnung des Adapters 13 wird mittels einer Klemmvorrichtung 29, welche am inneren Gehäuseteil 18, an der dem Griff gegenüberliegenden Stirnseite angebracht ist, bewerkstelligt und ist derart konstruiert, dass die Kontaktfläche zwischen dem Adapter 13 und dem inneren Gehäuseteil 18 minimal ist. Die Klemmvorrichtung 29 presst dabei die Federfinger stärker auf das Implantat 14 und wirkt dabei in Schliessstellung des Behälters als zusätzliche Transportsicherung. Zusätzlich wird dadurch bewerkstelligt, dass nur der Adapter 13 Kontaktflächen zu dem Behälter, nämlich zu dem inneren Gehäuseteil 18, aufweist, während das Dentalimplantat 18 keine Kontaktflächen zu dem Behälter hat.

In der vorliegenden Ausführungsform sind Adapter 13 und Halter 12 zweistückig gefertigt. Es ist in einer alternativen Ausführungsform aber auch denkbar, dass der Adapter 13 ein integraler Teil des Halters 12 ist und Halter 12 mit Adapter 13 entsprechend einstückig gefertigt ist.

In einer alternativen Ausführungsform ist die Ausnehmung 28 in dem äusseren Gehäuseteil 16 als Klemm- oder Stützvorrichtung ausgestaltet, stützt damit den Halter 12 beim Einführen in den Behälter in geschlossenem Zustand.

Figur 2 zeigt eine perspektivische Darstellung des Behälters 10 aus Figur 1, wobei sich der Behälter 10 im Gegensatz zur Figur 1 nicht in der Schliessstellung, sondern in der Offenstellung befindet. Zudem ist die lösbare Anordnung zwischen dem Adapter 13 und dem inneren Gehäuseteil 14 getrennt und der Halter 12, welcher zusammen mit dem Adapter 13 das Dentalimplantat 14 hält, aus dem Innenraum des Behälters 10 entfernt. Gut erkennbar sind schlitzartige Löcher 46 in dem äusseren Gehäuseteil 16 und inneren Gehäuseteil 18, die vorzugsweise röhrenförmig ausgeformten sind. Diese schlitzartigen Löcher erleichtern den Sterilisationsvorgang. Vorzugsweise ist wenigstens eine Stirnseite, besonders bevorzugt beide Stirnseiten, des inneren Gehäuseteils 18 offen. Idealerweise sind auch beide Stirnseiten des äusseren Gehäuseteils 16 offen.

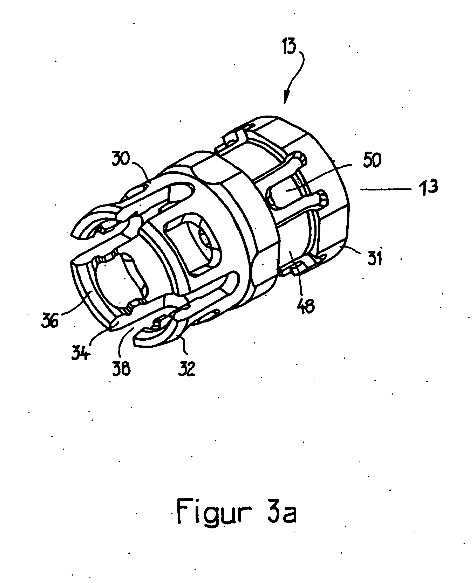

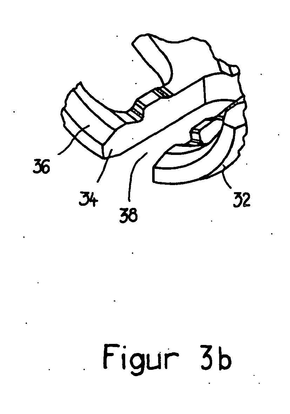

Figur 3a zeigt eine perspektivische Detailansicht vom Adapters 13 für das das Dentalimplantat 14, welcher in Figur 1 und Figur 2 abgebildet ist. Gut erkennbar sind am Adapterendbereich 30 angebrachte Federfinger 32, welche Stütznasen 34 aufweisen. In Figur 3b sind diese Stütznasen 34 vergrössert und in einer Detailansicht dargestellt. Die Stütznasen 34 bilden Auflageflächen 36 für das Dentalimplantat 14. An diesen Auflageflächen 36 wird, wie in Figur 2 gezeigt, das Dentalimplantat 14 gestützt und gehalten. Die Auflageflächen 36 zwischen den Stütznasen 34 und dem Dentalimplantat 14 sind so konstruiert, dass sie eine minimale Fläche aufweisen, um eine einfache Sterilisation des Dentalimplantates 14 zu ermöglichen. Zwischen den Stütznasen 34 des Adapters 13 sind schlitzartige Einkerbungen 38 angebracht. Die Stütznasen 34 weisen Aussparungen auf, um den Sterilisationsvorgang des Dentalimplantates 14 zu erleichtern und die Kontaktfläche zwischen Dentalimplantat 14 und dem Halter 12 weiter zu verringern. In der in Figur 3a gezeigten Ausführungsform weist der Adapter 13 im Adapterendbereich 31, der dem Adapterendbereich 30 gegenüberliegt, kerbenartige Vertiefung 48 mit weiteren eingebrachten Stützfingern 50 auf. Diese kerbenartige Vertiefung 48 mit den weiteren Stützfinger 50 bildet einen Teil der Klemmvorrichtung, um den Adapter 13 am Halter 12 anzubringen. Der Adapter 13 dient nach dem Entfernen der Einheit Implantat 14, Adapter 13 und Halter 12 aus dem Behälter als axiales Sicherungselement zwischen Implantat 14 und Halter 12 und definiert die axialen Lösekräfte zwischen diesen Komponenten. Die axialen Lösekräfte zwischen dem Implantat 14 und dem Adapter 13 sind kleiner als diejenigen zwischen Adapter 13 und Halter 12. Dadurch verbleibt der Adapter 13 nach dem Abziehen des Halters 12 vom Implantat 14 auf ersterem, das heisst, Halter 12 und Adapter 13 bleiben zusammen.

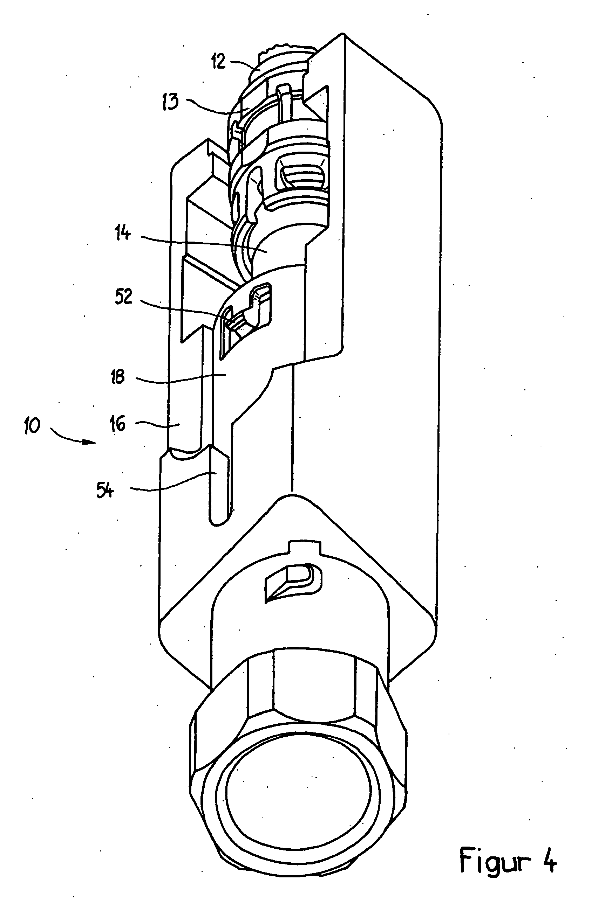

Figur 4 zeigt eine weitere Ausführungsform der Erfindung. Der Behälter 10 weist ein äusseres Gehäuseteil 16 und ein inneres Gehäuseteil 18 auf, wobei das innere Gehäuseteil 18 relativ zum äusseren Gehäuseteil 16 bewegbar ist. Der Adapter 13 für ein Dentalimplantat 14 ist auf der Stirnseite des Behälters 10 noch angedeutet. Das innere Gehäuseteil 18 weist ein Stoppelement 52 auf, das dazu bestimmt ist, mit dem einer Anschlagfläche oder einer Ausnehmung 54 des äusseren Gehäuseteils 16 zusammenzuwirken und so eine Entnahme des inneren Gehäuseteils 18 aus dem äusseren Gehäuseteils 16 zu verhindern. Das Stoppelement 52 kann dabei in seiner einfachsten Ausführungsweise dabei beispielsweise die Form einer Ausstülpung aufweisen.

## Patentansprüche

1. Behälter (10) mit einem äusseren Gehäuseteil (16) und einem relativ zu diesem von einer Schliessstellung in eine Offenstellung bewegbaren innerhalb des äusseren Gehäuseteils (16) angeordneten inneren Gehäuseteil (18) für ein medizinisches Instrument oder ein Implantat, insbesondere ein dentalmedizinisches Instrument oder ein Dentalimplantat (14), wobei der innere Gehäuseteil (18) einen von aussen zugänglichen Griff (44) aufweist, wobei der Behälter (10) einen Verriegelungsmechanismus (22) aufweist, der zwischen dem äusseren Gehäuseteil (16) und dem inneren Gehäuseteil (18) wirkt, wobei eine Betätigung des Griffs (44) eine Entriegelung des Verriegelungsmechanismus (22) bewirkt, und wobei der Behälter (10) einen Adapter (13) und ein Implantat enthält, **dadurch gekennzeichnet, dass** noch in Schliessstellung des Behälters (10) ein Halter (12) in den Adapter (13) einführbar und mit dem Implantat formschlüssig verbindbar ist.

2. Behälter (10) nach Anspruch 1, **dadurch gekennzeichnet, dass** die Entriegelung des Verriegelungsmechanismus (22) durch Drehen, Klemmen oder Schrauben des Griffs (44) bewirkt wird.

3. Behälter (10) nach einem der vorangehenden Ansprüche, **dadurch gekennzeichnet, dass** der Verriegelungsmechanismus (22) einen zwischen dem äusseren Gehäuseteil (16) und dem inneren Gehäuseteil (18) wirkenden Bajonettverschluss (24) aufweist.

4. Behälter (10) nach einem der vorangehenden Ansprüche, **dadurch gekennzeichnet, dass** er ein Dentalimplantat (14) enthält.

5. Behälter (10) nach einem der vorhergehenden Ansprüche, **dadurch gekennzeichnet, dass** das innere Gehäuseteil (18) eine Klemmvorrichtung (29) für den Adapter (13) aufweist, die an der dem Griff (44) gegenüberliegenden Seite des inneren Gehäuseteils (18) angebracht ist.

6. Behälter (10) nach einem der vorhergehenden Ansprüche, **dadurch gekennzeichnet, dass** die Anordnung des Adapters (13) an dem inneren Gehäuseteil (18) derart ausgestaltet ist, dass die Kontaktfläche zwischen dem Adapter (13) und dem inneren Gehäuseteil (18) minimal ist.

7. Behälter (10) nach Anspruch 6, **dadurch gekennzeichnet, dass** das innerhalb des äusseren Gehäuseteils 16) angeordnete Ende des inneren Gehäuseteils (18) Federfinger des Adapters (13) umschliesst.

8. Behälter (10) nach einem der vorhergehenden Ansprüche, **dadurch gekennzeichnet, dass** das Implantat (14) nur minimale Kontaktflächen mit dem Adapter (13) aufweist.

9. Behälter (10) nach einem der vorhergehenden Ansprüche, **dadurch gekennzeichnet, dass** das Implantat keine Kontaktflächen mit einem Gehäuseteil des Behälters (10) aufweist.

10. Behälter (10) nach einem der vorhergehenden Ansprüche, **dadurch gekennzeichnet, dass** das äussere Gehäuseteil (16), das innere Gehäuseteil (18) und der Adapter (13) aus einem biokompatiblen Material, vorzugsweise aus Titan oder Kunststoff, gefertigt sind.

11. Behälter (10) nach einem der vorhergehenden Ansprüche, **dadurch gekennzeichnet, dass** das äussere Gehäuseteil (16) und das innere Gehäuseteil (18) formstabil ausgebildet sind.

12. Behälter (10) nach einem der vorhergehenden Ansprüche, **dadurch gekennzeichnet, dass** das äussere Gehäuseteil (16) und das innere Gehäuseteil (18) röhrenförmig ausgebildet sind und schlitzartige Löcher (46) für einen Sterilisationsvorgang aufweisen.

13. Behälter (10) nach einem der vorhergehenden Ansprüche, **dadurch gekennzeichnet, dass** sowohl das innere Gehäuseteil (18) als auch das äussere Gehäuseteil (16) an ihren jeweiligen Stirnseiten offen sind.

14. Behälter (10) nach einem der vorhergehenden Ansprüche, **dadurch gekennzeichnet, dass** das innere Gehäuseteil (18) ein Stoppelement (52) aufweist, das dazu bestimmt ist, mit dem äusseren Gehäuseteil (16) zusammenzuwirken.

## Claims

1. Container (10) with an outer housing part (16) and an inner housing part (18), which is arranged inside the outer housing part (16) and is moveable relative to the later from a closed position to an open position, for a medical instrument or an implant, in particular a dental instrument or a dental implant (14), wherein the inner housing part (18) has a grip element (44) accessible from the outside, wherein the container (10) has a locking mechanism (22), which acts between the outer housing part (16) and the inner housing part (18), wherein an actuation of the grip element (44) causes an unlocking of the locking mechanism (22), and wherein the container (10) contains an adapter (13) and an implant, **characterized in that** a holder (12) is insertable into the adapter (13), still in the closed position of the container (10), and is connectable to the implant with a form fit.

2. Container (10) according to claim 1, **characterized in that** the locking mechanism (22) is unlocked by turning, clamping or screwing of the grip element (44).

3. Container (10) according to one of the preceding claims, **characterized in that** the locking mechanism (22) comprises a bayonet catch (24) acting between the outer housing part (16) and the inner housing part (18).

4. Container (10) according to one of the preceding claims, **characterized in that** it contains a dental implant (14).

5. Container (10) according to one of the preceding claims, **characterized in that** the inner housing part (18) has a clamping device (29) for the adapter (13), which clamping device (29) is mounted on that end of the inner housing part (18) remote from the grip element (44).

6. Container (10) according to one of the preceding claims, **characterized in that** the adapter (13) is arranged on the inner housing part (18) in such a way that the contact surface between the adapter (13) and the inner housing part (18) is minimal.

7. Container (10) according to claim 6, **characterized in that** that end of the inner housing part (18) arranged inside the outer housing part (16) surrounds resilient fingers of the adapter (13).

8. Container (10) according to one of the preceding claims, **characterized in that** the implant (14) has only minimal contact surfaces with the adapter (13).

9. Container (10) according to one of the preceding claims, **characterized in that** the implant has no contact surfaces with a housing part of the container (10).

10. Container (10) according to one of the preceding claims, **characterized in that** the outer housing part (16), the inner housing part (18) and the adapter (13) are made of a biocompatible material, preferably of titanium or plastic.

11. Container (10) according to one of the preceding claims, **characterized in that** the outer housing part (16) and the inner housing part (18) are dimensionally stable.

12. Container (10) according to one of the preceding claims, **characterized in that** the outer housing part (16) and the inner housing part (18) are tubular and have slit-like holes (46) for a sterilization procedure.

13. Container (10) according to one of the preceding claims, **characterized in that** both the inner housing part (18) and also the outer housing part (16) are open at their respective end faces.

14. Container (10) according to one of the preceding claims, **characterized in that** the inner housing part (18) has a stop element (52), which is designed to engage with the outer housing part (16).

## Revendications

1. Récipient (10) comprenant une partie de boîtier extérieure (16) et une partie de boîtier intérieure (18) disposée à l'intérieur de la partie de boîtier extérieure (16) de manière déplaçable par rapport à celle-ci depuis une position de fermeture dans une position d'ouverture, pour un instrument médical ou un implant, en particulier un instrument médical dentaire ou un implant dentaire (14), la partie de boîtier intérieure (18) présentant une prise (44) accessible depuis l'extérieur, le récipient (10) présentant un mécanisme de verrouillage (22) qui agit entre la partie de boîtier extérieure (16) et la partie de boîtier intérieure (18), un actionnement de la prise (44) provoquant un déverrouillage du mécanisme de verrouillage (22), et le récipient (10) contenant un adaptateur (13) et un implant, **caractérisé en ce que** lorsque le récipient (10) est encore dans la position de fermeture, un dispositif de retenue (12) peut être introduit dans l'adaptateur (13) et peut être connecté par engagement par correspondance géométrique à l'implant.

2. Récipient (10) selon la revendication 1, **caractérisé en ce que** le déverrouillage du mécanisme de verrouillage (22) s'effectue par rotation, serrage ou vissage de la prise (44).

3. Récipient (10) selon l'une quelconque des revendications précédentes, **caractérisé en ce que** le mécanisme de verrouillage (22) présente une fermeture à baïonnette (24) agissant entre la partie de boîtier extérieure (16) et la partie de boîtier intérieure (18).

4. Récipient (10) selon l'une quelconque des revendications précédentes, **caractérisé en ce qu'**il contient un implant dentaire (14).

5. Récipient (10) selon l'une quelconque des revendications précédentes, **caractérisé en ce que** la partie de boîtier intérieure (18) présente un dispositif de serrage (29) pour l'adaptateur (13), lequel est monté sur le côté de la partie de boîtier intérieure (18) opposé à la prise (44).

6. Récipient (10) selon l'une quelconque des revendications précédentes, **caractérisé en ce que** l'agencement de l'adaptateur (13) sur la partie de boîtier intérieure (18) est configuré de telle sorte que la surface de contact entre l'adaptateur (13) et la partie de boîtier intérieure (18) soit minimale.

7. Récipient (10) selon la revendication 6, **caractérisé en ce que** l'extrémité de la partie de boîtier intérieure (18) disposée à l'intérieur de la partie de boîtier extérieure (16) entoure des doigts élastiques de l'adaptateur (13).

8. Récipient (10) selon l'une quelconque des revendications précédentes, **caractérisé en ce que** l'implant (14) ne présente que des surfaces de contact minimales avec l'adaptateur (13).

9. Récipient (10) selon l'une quelconque des revendications précédentes, **caractérisé en ce que** l'implant ne présente aucune surface de contact avec une partie de boîtier du récipient (10).

10. Récipient (10) selon l'une quelconque des revendications précédentes, **caractérisé en ce que** la partie de boîtier extérieure (16), la partie de boîtier intérieure (18) et l'adaptateur (13) sont fabriqués en un matériau biocompatible, de préférence en titane ou en plastique.

11. Récipient (10) selon l'une quelconque des revendications précédentes, **caractérisé en ce que** la partie de boîtier extérieure (16) et la partie de boîtier intérieure (18) sont réalisées avec une stabilité de forme.

12. Récipient (10) selon l'une quelconque des revendications précédentes, **caractérisé en ce que** la partie de boîtier extérieure (16) et la partie de boîtier intérieure (18) sont réalisées sous forme de tubes et présentent des trous (46) en forme de fentes pour une opération de stérilisation.

13. Récipient (10) selon l'une quelconque des revendications précédentes, **caractérisé en ce que** la partie de boîtier intérieure (18) ainsi que la partie de boîtier extérieure (16) sont ouvertes au niveau de leurs côtés frontaux respectifs.

14. Récipient (10) selon l'une quelconque des revendications précédentes, **caractérisé en ce que** la partie de boîtier intérieure (18) présente un élément de butée (52) qui est prévu pour coopérer avec la partie de boîtier extérieure (16).
